# EUROPEAN PATENT SPECIFICATION

(11) **EP 1 413 895 B1**
(45) Date of publication and mention of the grant of the patent: **24.08.2005**
(21) Application number: 02023819.2
(22) Date of filing: 23.10.2002
(51) Int. Cl.: G01S 5/14

(54) **A method and apparatus for generating a GPS simulation scenario**
Verfahren und Vorrichtung zur Erzeugung eines GPS Simulationsszenario
Méthode et appareil pour générer un scénario de simulation de GPS

(43) Date of publication of application: 28.04.2004
(73) Proprietor: SIEMENS AKTIENGESELLSCHAFT, 80333 München (DE)
(72) Inventor: Schradi, Stefan, 78048 Villingen-Schwenningen (DE)

(56) References cited:
- WO-A-01/86315
- MAR J ET AL: "Simulations of the positioning accuracy of integrated vehicular navigation systems" IEE PROCEEDINGS: RADAR, SONAR & NAVIGATION, INSTITUTION OF ELECTRICAL ENGINEERS, GB, vol. 143, no. 2, 3 April 1996 (1996-04-03), pages 121-128, XP006006703 ISSN: 1350-2395
- MARAIS J ET AL: "UTILISATION DU TRAITMENT D'IMAGES POUR L' VALUATION DE LA DISPONIBILIT DES SATELLITES GPS LE LONG D'UNE VOIE DE CHEMIN DE FER" REVUE GENERALE DES CHEMINS DE FER, CENTRALE DES REVUES DUNOD-GAUTHIER-VILLARS. PARIS, FR, vol. 1999, no. 6, June 1999 (1999-06), pages 35-42,47, XP004371453 ISSN: 0035-3183
- HIROYASU ISHIKAWA ET AL: "A HIGH-ACCURACY POSITIONING SERVICE FOR LAND-BASED MOBILE COMMUNICATION SYSTEMS USING THE DGPS METHOD" ELECTRONICS & COMMUNICATIONS IN JAPAN, PART I - COMMUNICATIONS, SCRIPTA TECHNICA. NEW YORK, US, vol. 77, no. 6, 1 June 1994 (1994-06-01), pages 27-38, XP000476164 ISSN: 8756-6621

## Description

The invention relates to a method and a corresponding apparatus for generating a GPS Simulation Scenario for therewith simulating a reality driving experiment along a prespecified itinerary.

GPS technology has been used for position determining of motor vehicles to assist a driver in optimizing policies as based on such position, in planning a route from an actual location to an intended destination, and various other purposes. Actual performance of such GPS technology in real life depends on the facilities that are present in the motor vehicle, and also on the orientation angles with regard to the earth's surface and reception signal strengths of the various satellites that are in fact used for the position determining. Furthermore, the reception quality of the satellite signals will often be heavily influenced by such stationary obstacles such as tunnels, mountains, woods, buildings, and the like. A brute force approach would be a real-life test by actually driving along various routes and evaluating the actual performance of the GPS system. Although feasible, such would be prohibitively expensive in view of repetitive modifications to such complex GPS systems.

Furthermore, present-day GPS ***simulators*** include apparatuses and methods that assist in simulating the signals from GPS satellites. After entering time and location data, the simulator will produce appropriate signals from those satellites that would at the specified time and place be visible above the horizon. Various quite expensive high end multi-channel simulators allow to actually produce dynamic GPS-reception scenarios. Thereto the user should, under interaction with a so-called Scrip-Language, manually enter a starting time, as well as for each determinative node of the route to be followed, entering the associated position coordinates, travel direction and speed, as well as the environmental parameters that should be simulated. The latter parameters would include whole or partial obscuring of the various satellites, and furthermore reflexion, damping, and reception intensity of the GPS signals. It would be clear that such procedure would require an immense effort, so that only relatively short such scenarios have been constructed in practice. These would represent various reception profiles, but would generally be not representative for real driving tests. Since it is almost impossible to generate real world driving simulation scenarios which consider all GPS-reception aspects along a specified itinerary, present day GPS-Simulators can't be used for testing of complete systems based on GPS-Positioning and are generally restricted to the development and manufacturing of tests for GPS receivers related to a single location.

In consequence, there is a clear and growing need for an automatic or semi-automatic method to test and validate complete navigation units, and possibly other apparatuses that would use the GPS position as input data for their internal processes. Examples of such further applications are toll-calculating facilities, fleet management, travel cost management, and various others. Next to the application of the invention to standard motor vehicles that predominantly use a limited set of charted roads only, a further useful field of application is the simulation pertaining to off-road vehicles, such as for use in forestry and agriculture, surveying, police and military applications, and other. Especially in the latter fields, the ***specifying*** of the various vehicle positions would be quite unfeasible.

Now, the inventor has recognized that although the quality of actual vehicle position determination depends on GPS performance, and the latter is the subject of performance determination, it would be an advantageous principle to ***revert*** the sequence of operations, in that first the rough vehicle position is determined which is subsequently used to extract the data necessary for calculating the GPS performance.

In consequence, amongst other things, it is an object of the present invention to use available ***map*** data for at least in part calculating the positions and times pertaining to the vehicle presence, and on the basis thereon calculating actual GPS performance scenario.

Now therefore, according to one of its aspects the invention is characterized by the following steps:
- providing a digitized map data set comprising a geographical region pertaining to said itinerary, and which data set includes data regarding static environmental features that are present along said itinerary;
- providing dynamic and/or static positional and transmittal data regarding GPS satellites that are potentially relevant for GPS-based position determination along said itinerary;
- specifying a starting time instant and geographical starting and destination positions of said itinerary and calculating various vehicle routes as based on said digitized map data set, and from said calculated routes determining various sets of vehicle node positions and associated time instants along said itinerary;
- from said dynamic and/or static positional and transmittal data regarding GPS satellites and said static environmental features present along said itinerary calculating various instantaneous GPS quality metrics;
- and as based on said various GPS quality metrics and associated time instants calculating an overall GPS performance data quantity pertaining to said itinerary.

In this way it becomes possible to automatically realize the GPS-simulation scenarios that would replace real driving tests, inasmuch as substantially all environmental conditions pertaining to real GPS configurations can be simulated. This allows on the one hand a much broader application of the expensive GPS simulators in that they could be used for testing and validating complete systems and not only the position determining proper. On the other hand, many tests could be effected by much simpler configurations.

According to the invention, the simulating of a lorry travel from Hamburg to Munich, Germany, needs for the setting up of a scenario only the inputting of starting time and location, and destination location, and furthermore, only a few parameter values, such as speed and a selection among plural possible routes if applicable. The latter would of course require to generate all applicable itineraries. The available digital map would then produce all necessary driver's information. Subsequently, the GPS driving scenario may, after generating thereof, be replayed, such as for the functionality test of a complete lorry based toll system from the GPS antenna reception right through the final toll duty calculation. This allows that navigation and navigation-based systems can have complete testing of all relevant parameter-based operations in the lab without necessity for real driving tests. In particular, the fast advance of software allows to implement simulators according to the invention almost without influencing any hardware directly. Moreover, the present invention allows coverage of multidimensional exhaustive parameter selection almost without any additional hardware efforts.

In calculating various vehicle routes as based on said digitized map data set according to the invention, not only the optimum vehicle route is of interest. From a (system-) testing point of view the worst vehicle route is also very important to check the overall system performance under worst case GPS reception conditions. In some cases it should be even of interest to check all the alternative (charted) routes. The invention enables to execute worst-case tests, through selecting an unfavourable yet realistic test environment. This inter alia allows to localize the system behaviour with respect to its weak spots both in the apparatus itself, and also in the environmental field. Such would for example allow to pinpoint weak system performance, so that, for example, an additional fallback facility for a road-toll system could be introduced.

Therefore, a method according to the invention is preferably characterized by allowing a user-controlled amending of said calculated time instants and/or vehicle node positions along said itinerary.

Another method according to the invention is preferably characterized by dividing said itinerary in sections, whilst on the basis of any single said section calculating said GPS quality metrics.

This preferred method may further be characterized in that each said section has a substantially uniform value for its quality metric.

Yet another method according to the invention is preferably characterized by allowing its application regarding off-road vehicles through inter alia allowing off-road sections.

An alternative preferred method according to the invention is characterized in that said overall GPS performance data quantity is fed into a further user system for testing a user performance level of said user system.
This allows the GPS simulation scenario to be played back normally by a GPS-Simulator which generates the satellite RF-signals

Another alternative preferred method according to the invention is characterized by through applying variations on a test environment applying to approach a worst case.

The invention also relates to an apparatus being arranged for implementing a method as claimed in Claim 1. In particular, such allows to optimize the apparatus through amending various operating parameters thereof, such apparatus according to the invention being characterised by generating means for generating a GPS Simulation Scenario for therewith simulating a reality driving experiment along a prespecified itinerary, and in particular comprising:
- map data storage means providing a digitized map data set comprising a geographical region pertaining to said itinerary, and which data set includes data regarding static environmental features that are present along said itinerary;
- satellite data storage means for providing dynamic and/or static positional and transmittal data regarding GPS satellites that are potentially relevant for GPS-based position determination along said itinerary;
- first calculating means;
- user input means allowing to specify a starting time instant and geographical starting and destination positions of said itinerary into said first calculating means that is also fed by said map data storage means, said first calculating means calculating various vehicle routes as based on said digitized map data set, and from said calculated routes determining various sets of vehicle node positions and associated time instants along said itinerary;
- second calculating means fed by said first calculating means and by said satellite data storage means from said dynamic and/or static positional and transmittal data regarding GPS satellites, said static environmental features present along said itinerary and said various vehicle routes calculating various instantaneous GPS quality metrics,
- and as based on said various GPS quality metrics and associated time instants calculating an overall GPS performance data quantity pertaining to said itinerary.

These and further aspects and advantages of the invention will be discussed more in detail hereinafter with reference to the disclosure of preferred embodiments, and in particular with reference to the appended Figures that show:
- Figure 1,: a vehicle-based GPS facility;
- Figure 2,: an exemplary geometrical configuration of GPS satellite facilities;
- Figure 3,: the configuration of Figure 2 in stereometric projection;
- Figure 4,: an exemplary geographical situation as seen from a satellite;
- Figure 5,: a data chart to be used for the inputting of scenario data;
- Figure 6,: a flow chart pertaining to generating an actual GPS Simulation Scenario.

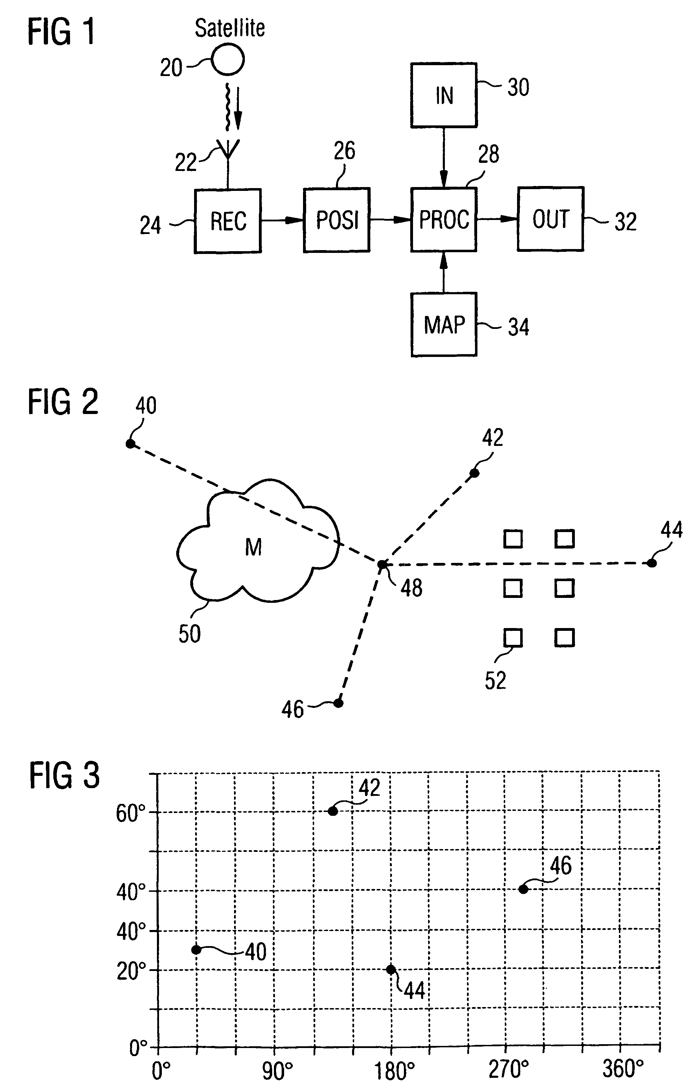

Figure 1 illustrates a vehicle-based GPS facility. For brevity, all elements pertaining to the vehicle itself have been omitted. Now as shown, satellite 20 transmits a broadcast signal pattern that is suitable for use in a GPS position determining system. Vehicle-based antenna 22 receives the signal, which is then appropriately amplified and filtered in receiving facility 24. The signals so received from a plurality, such as four, satellites are used in position determining facility 26 to calculate the actual position of the vehicle. For clarity, a separate processor 28 gets user input from facility 30, provides user output to facility 32, and accesses a data store 34 that may contain map data and further data that would be appropriate to the field of application. Facility 26 may be mapped on central processor 28. With such system a user could ask to calculate various routes, and in particular an optimum route from a starting point to a destination, possibly given various additional requirements, such as a fastest or a more scenic route, etcetera. In practice, given a calculated position that is not exactly on a charted road, the system will often be able to apply a correction to this position in case the vehicle would be constrained to driving on a route, such as by calculating the closest position on a proper route. In case this restriction would not apply such as for terrain vehicles, the requirements to the accuracy of the calculating would be higher, because the above correction would not be feasible.

Figure 2 illustrates an exemplary geometrical configuration of GPS satellite facilities. The vehicle at 48 should calculate its position as based on the signals from four satellites 40-46 that are located at various angular positions. Now, satellites 42 and 46 are located at an angular position where no signal deterioration through terrestrial objects occurs. For satellite 44, the shortest path is through a city 52 with various high-rise buildings. This could cause attenuation of the signal, as well as various reflection patterns, so that the apparent distance and angular position as "seen" from the vehicle could differ from reality. The resulting calculation of the vehicle position could therefore be erroneous as well. Likewise, the signal from satellite 40 is influenced by mountain 50, and a similar situation applies as in the case of satellite 44. Now, various algorithms are being considered that would mitigate the above negative influences, such as low-pass filtering when the vehicle would pass along city 52, but their effectiveness is not guaranteed. Another algorithm would be based on selecting between redundant satellites. In particular cases, such as in a tunnel, the signals from all satellites would be blocked. In that case, a less perfect position determination system could be used, such as being based on odometer and compass. However, at the leaving of the tunnel, this would require a smooth takeover by the satellite system again.

Figure 3 illustrates the configuration of Figure 2 in stereometric projection. Here, horizontally the compass directions are shown from 0 degrees (left hand or West in Figure 2) clockwise to 360 degrees. Vertically, the elevation angle is shown from 0 degrees (earth level) to 90 degrees (vertical). As shown satellites 40 and 44 have a relatively low elevation, which would potentially aggravate the problems discussed with reference to figure 2. Satellites 42 and 46 have a higher elevation.

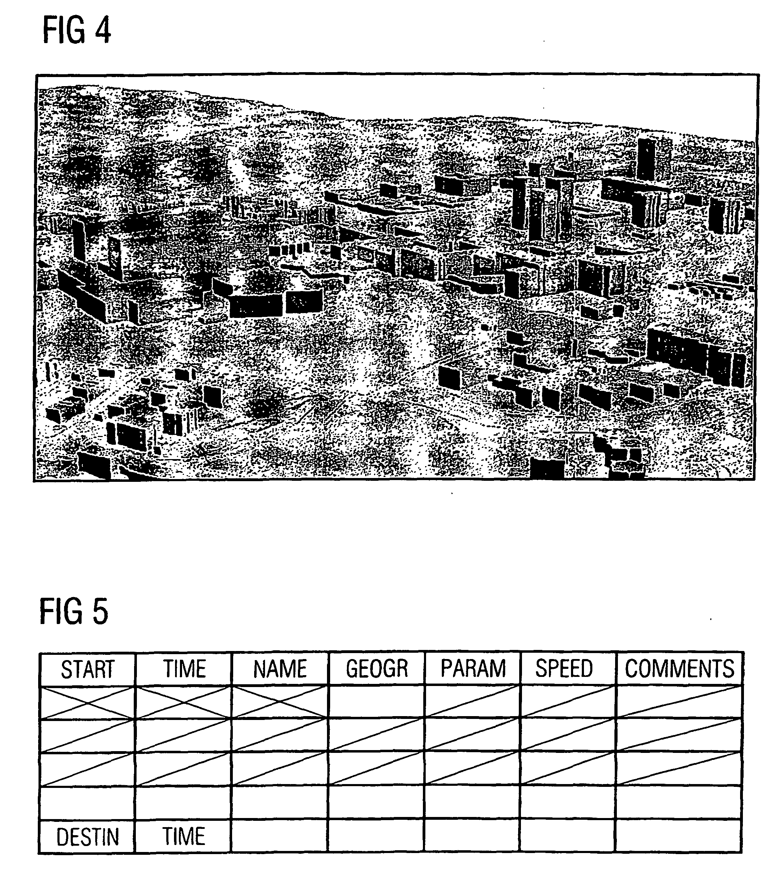

Figure 4 illustrates an exemplary geographical situation as seen from a satellite. As visible, on a somewhat hilly terrain various buildings of greater and lesser height are located. Roads have been indicated by dotted lines. The situation is taken as illustrative for the possibility to mask roads as well as off-road regions. The problem would be more serious in the case of satellites at a low-elevation angle, and in the case of higher and closer-spaced buildings.

Figure 5, illustrates a data chart to be used for the inputting of scenario data. In the chart, a user would input ***start***ing location and ***time***, first two columns, top line, and the destination, bottom line. Then the system would calculate a sequence of intermediate locations and associated instants, single hatched. Furthermore, the system would look up ***names*** of locations, associated ***speed***, ***geogr***aphical details, satellite reception ***parameters***, and such ***comments*** as appropriate. Also the destination ***time*** will be calculated. Given the data so presented, a user person may decide to amend, such as by lowering speed or commanding a detour. After finishing the route finding, the remainder of the calculation is effected as discussed below. The locations can be given in the form of route positions, such as "Fourth Avenue and 42nd Street" or "Times Square", or rather in the form of coordinate values.

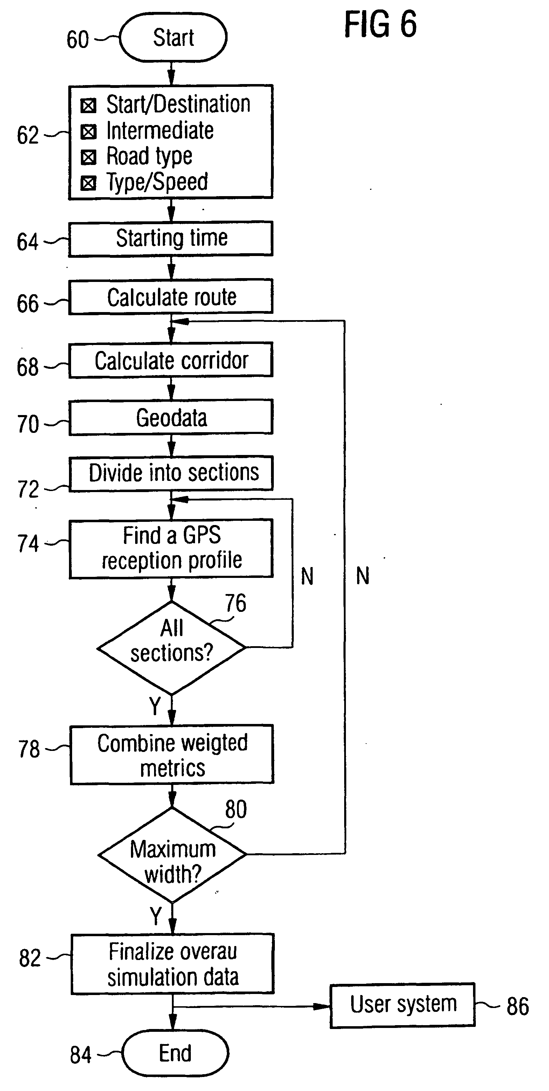

Figure 6 illustrates a flow chart pertaining to generating an actual GPS Simulation Scenario. Here the calculation is generally effected in a non-vehicle based facility. Relative to the arrangement of Figure 1, the processing substantially corresponds, but the satellite signals are rather not measured but derived from the system internally.

In block 60, the procedure is commenced, and the necessary hardware and software are assigned. In block 62, the operator is asked to enter the START and DESTINATION locations, INTERMEDIATE locations if necessary, ROAD TYPE and vehicle TYPE and/or SPEED. Next, in block 64 the user enters the STARTING TIME. Next, in block 66, the system CALCULATES the ROUTE and reads associated data from the digital map that is available. Next, in block 68, the system CALCULATES a CORRIDOR at either side of the calculated road or itinerary. The width ***b*** is calculated according to ***b = b + delta,*** which means that the width is calculated incrementally by the use of incremental steps ***delta.*** Next, in block 70, the system reads GEO graphical DATA from the digital map that are associated to the calculated route and to the corridor.

Next, in block 72 the route is DIVIDEd INTO SECTIONS, depending on the parameters that would influence GPS signal reception, such as tunnels, wooded or bare mountains and hills, high-rise buildings, noise-abating walls along the road in question, bridges, etcetera. In block 74, each such section finds a calculated GPS-reception profile or metric. Each such section would have a uniform result, however. The profiles can be read from a look-up table, or be calculated online as based on a set of standard equations. For example, a tunnel gets assigned a zero-reception metric. In a standard city with four-storey buildings satellites below a certain elevation get downrated, whereas others will not be influenced. Near a steep mountain, satellites below the mountain elevation will get downrated in the associated direction only. Furthermore, depending on their position relative to buildings multipath propagation can occur. Such multi-path situations and other reflection effects will be taken into account as well.

In block 76, the system tests whether ALL SECTIONS have be treated. If not, the procedure loops back to block 74. Otherwise, in block 78, the metrics for all sections are WEIGHTed, such as in proportion to the travelling time for the section in question and the METRICS ARE COMBINED for all sections. In block 80, the system detects whether the MAXIMUM WIDTH of the corridor has been attained. If no, the system loops back to block 68. This would means that if a narrow corridor allows good reception already, no further extension of the local corridor is necessary. On the other hand, if a narrow corridor would give zero reception such as in the case of a tunnel, no extension of the corridor would be useful either. In fact, the extending of the corridor would cause reflection sources to become relevant or rather, to remain irrelevant, so that the metric could be calculated in the best possible manner. In some cases it is possible that there are obstacles outside the first but inside the maximum corridor width. In such cases the incremental steps ***delta*** can be increased and the searching policy changed to accelerate searching in the corridor. When the corridor has reached its maximum value, the system in block 82 FINALIZES TO OVERALL SIMULATION DATA base for presentation to a user in the form of raw or aggregated simulation data. Finally, in block 84 the construction/calculation of the GPS-simulation scenario is terminated, and the assigned facilities get relinquished if appropriate.

If the simulation result functions as an intermediate information for a further comprehensive user system, such further user system 86 would be fed with the simulation result from block 82, for as based thereupon executing a subsequent simulation.

The present invention has been disclosed with reference to preferred embodiments that should be considered as exemplary, instead of restrictive, inasmuch as persons skilled in the art would recognize numerous amendments within the scope of the appended Claims.

## Claims

1. A method for generating a GPS Simulation Scenario for therewith simulating a reality driving experiment along a prespecified itinerary, said method being **characterized by** comprising the following steps:
- providing a digitized map data set comprising a geographical region pertaining to said itinerary, and which data set includes data regarding static environmental features that are present along said itinerary;
- providing dynamic and/or static positional and transmittal data regarding GPS satellites that are potentially relevant for GPS-based position determination along said itinerary;
- specifying a starting time instant and geographical starting and destination positions of said itinerary and calculating various vehicle routes as based on said digitized map data set, and from said calculated routes determining various sets of vehicle node positions and associated time instants along said itinerary;
- from said dynamic and/or static positional and transmittal data regarding GPS satellites and said static environmental features present along said itinerary calculating various instantaneous GPS quality metrics;
- and as based on said various GPS quality metrics and associated time instants calculating an overall GPS performance data quantity pertaining to said itinerary.

2. A method as claimed in Claim 1, being **characterized by** allowing a user-controlled amending of said calculated time instants and/or vehicle node positions along said itinerary.

3. A method as claimed in Claim 1, being **characterized by** dividing said itinerary in sections, whilst on the basis of any single said section calculating said GPS quality metrics.

4. A method as claimed in Claim 3, being **characterized in that** each said section has a substantially uniform value for its quality metric.

5. A method as claimed in Claim 1, being **characterized by** allowing its application regarding off-road vehicles through inter alia allowing off-road sections.

6. A method as claimed in Claim 1, being **characterized in that** said overall GPS performance data quantity is fed into a further user system for testing a user performance level of said user system.

7. A method as claimed in Claim 1, being **characterized by** through applying variations on a test environment applying to approach a worst case.

8. An apparatus being arranged for implementing a method as claimed in Claim 1, being **characterized by** generating means for generating a GPS Simulation Scenario for therewith simulating a reality driving experiment along a prespecified itinerary, and in particular comprising:
- map data storage means providing a digitized map data set comprising a geographical region pertaining to said itinerary, and which data set includes data regarding static environmental features that are present along said itinerary;
- satellite data storage means providing dynamic and/or static positional and transmittal data regarding GPS satellites that are potentially relevant for GPS-based position determination along said itinerary;
- first calculating means;
- user input means allowing to specify a starting time instant and geographical starting and destination positions of said itinerary into said first calculating means that is also fed by said map data storage means said first calculating means calculating various vehicle routes as based on said digitized map data set, and from said calculated routes determining various sets of vehicle node positions and associated time instants along said itinerary;
- second calculating means fed by said first calculating means and by said satellite data storage means from said dynamic and/or static positional and transmittal data regarding GPS satellites, said static environmental features present along said itinerary and said various vehicle routes calculating various instantaneous GPS quality metrics,
- and as based on said various GPS quality metrics and associated time instants calculating an overall GPS performance data quantity pertaining to said itinerary.

## Patentansprüche

1. Verfahren zur Erzeugung eines GPS-Simulationsszenarios zur Simulation eines Realitäts-Fahrexperiments entlang einer im Voraus spezifizierten Reiseroute damit, wobei das Verfahren durch die folgenden Schritte **gekennzeichnet** ist:
- Bereitstellen eines digitalisierten Kartendatensatzes, der eine die Reiseroute betreffende geographische Region umfaßt, und wobei der Datensatz Daten bezüglich statischer Umgebungsmerkmale enthält, die entlang der Reiseroute vorhanden sind;
- Bereitstellen dynamischer und/oder statischer Positions- und Übertragungsdaten bezüglich GPS-Satelliten, die potentiell für die GPS-gestützte Positionsbestimmung entlang der Reiseroute relevant sind;
- Spezifizieren eines Startzeitpunkts und einer geographischen Start- und Zielposition der Reiseroute und Berechnen verschiedener Fahrzeugrouten auf der Basis des digitalisierten Kartendatensatzes, und Bestimmen verschiedener Mengen von Fahrzeugknotenpositionen und zugeordneten Zeitpunkten entlang der Reiseroute aus den berechneten Routen;
- Berechnen verschiedener momentaner GPS-Qualitätsmetriken aus den dynamischen und/oder statischen Positions- und Übertragungsdaten bezüglich GPS-Satelliten und den entlang der Reiseroute vorhandenen statischen Umgebungsmerkmalen;
- und auf der Basis der verschiedenen GPS-Qualitätsmetriken und der zugeordneten Zeitpunkte, Berechnen einer Gesamt-GPS-Leistungsfähigkeitsdatengröße, die die Reiseroute betrifft.

2. Verfahren nach Anspruch 1, **dadurch gekennzeichnet, daß** eine benutzergesteuerte Veränderung der berechneten Zeitpunkte und/oder Fahrzeugknotenpositionen entlang der Reiseroute ermöglicht wird.

3. Verfahren nach Anspruch 1, **dadurch gekennzeichnet, daß** die Reiseroute in Abschnitte unterteilt wird, während die GPS-Qualitätsmetriken auf der Basis eines beliebigen einzelnen der Abschnitte berechnet werden.

4. Verfahren nach Anspruch 3, **dadurch gekennzeichnet, daß** jeder Abschnitt einen im wesentlichen gleichförmigen Wert für seine Qualitätsmetrik aufweist.

5. Verfahren nach Anspruch 1, **dadurch gekennzeichnet, daß** seine Anwendung bezüglich Geländefahrzeugen ermöglicht wird, indem u.a. Abschnitte außerhalb von Straßen zugelassen werden.

6. Verfahren nach Anspruch 1, **dadurch gekennzeichnet, daß** die Gesamt-GPS-Leistungsfähigkeitsdatengröße in ein weiteres Benutzersystem eingespeist wird, um einen Benutzerleistungsfähigkeitsgrad des Benutzersystems zu prüfen.

7. Verfahren nach Anspruch 1, **dadurch gekennzeichnet, daß** durch Anwenden von Variationen auf eine Testumgebung eine Anwendung zur Annäherung an einen ungünstigsten Fall erreicht wird.

8. Vorrichtung, die so angeordnet ist, daß sie ein Verfahren nach Anspruch 1 implementiert, **gekenn** **zeichnet durch** Erzeugungsmittel zur Erzeugung eines GPS-Simulationsszenarios zum Simulieren eines Realitäts-Fahrexperiments entlang einer im Voraus spezifizierten Reiseroute damit, und insbesondere umfassend:
- Kartendatenspeichermittel, die einen digitalisierten Kartendatensatz bereitstellen, der eine die Reiseroute betreffende geographische Region umfaßt, und wobei der Datensatz Daten bezüglich statischer Umgebungsmerkmale enthält, die entlang der Reiseroute vorhanden sind;
- Satellitendatenspeichermittel, die dynamische und/oder statische Positions- und Übertragungsdaten bezüglich GPS-Satelliten bereitstellen, die potentiell für die GPS-gestützte Positionsbestimmung entlang der Reiseroute relevant sind;
- erste Berechnungsmittel;
- Benutzereingabemittel, die die Spezifikation eines Startzeitpunkts und einer geographischen Start- und Zielposition der Reiseroute in die ersten Berechnungsmittel, die außerdem durch die Kartendatenspeichermittel gespeist werden, ermöglichen, wobei die ersten Berechnungsmittel verschiedene Fahrzeugrouten auf der Basis des digitalisierten Kartendatensatzes berechnen und aus den berechneten Routen verschiedene Sätze von Fahrzeugknotenpositionen und zugeordneten Zeitpunkten entlang der Reiseroute bestimmen;
- durch die ersten Berechnungsmittel und durch die Satellitendatenspeichermittel gespeiste zweite Berechnungsmittel, die aus den dynamischen und/oder statischen Positions- und Übertragungsdaten bezüglich GPS-Satelliten, den entlang der Reiseroute vorhandenen statischen Umgebungsmerkmalen und den verschiedenen Fahrzeugrouten verschiedene momentane GPS-Qualitätsmetriken berechnen,
- und auf der Basis der verschiedenen GPS-Qualitätsmetriken und zugeordneten Zeitpunkte eine Gesamt-GPS-Leistungsfähigkeitsdatengröße bezüglich der Reiseroute berechnen.

## Revendications

1. Procédé pour produire un scénario de simulation de GPS pour simuler, à l'aide de celui-ci, une expérience de conduite dans la réalité, le long d'un itinéraire spécifié à l'avance, le procédé étant **caractérisé par** le fait de comprendre les étapes consistant à :
- fournir un ensemble de données cartographiques numérisées comprenant une région géographique propre à l'itinéraire, lequel ensemble de données comprend des données concernant des caractéristiques environnementales statiques qui sont présentes le long de l'itinéraire ;
- fournir des données dynamiques et/ou statiques de position et de transmission, concernant des satellites de GPS qui sont potentiellement appropriés à la détermination de position par GPS, le long de l'itinéraire ;
- spécifier un instant de départ et des positions géographiques de départ et de destination de l'itinéraire et calculer divers trajets de véhicule, sur la base de l'ensemble de données cartographiques numérisées, et à partir des trajets calculés, déterminer divers ensembles de positions nodales de véhicule et d'instants associés, le long de l'itinéraire ;
- à partir des données dynamiques et/ou statiques de position et de transmission concernant des satellites de GPS et à partir des caractéristiques environnementales présentes le long de l'itinéraire, calculer diverses données métriques instantanées de qualité du GPS ; et
- sur la base des diverses données métriques de qualité du GPS et des instants associés, calculer une quantité globale de données de performances de GPS, propres à l'itinéraire.

2. Procédé suivant la revendication 1, **caractérisé par** le fait de permettre une modification commandée par l'utilisateur des instants calculés et/ou des positions nodales de véhicule, le long de l'itinéraire.

3. Procédé suivant la revendication 1, étant **caractérisé par** le fait de diviser l'itinéraire en segments, tout en calculant sur la base d'un segment unique quelconque les données métriques de qualité de GPS.

4. Procédé suivant la revendication 3, **caractérisé en ce que** chaque segment a une valeur sensiblement uniforme correspondant à sa qualité métrique.

5. Procédé suivant la revendication 1, **caractérisé par** le fait de permettre son application concernant des véhicules hors route, en autorisant entre autres, de considérer des segments hors route.

6. Procédé suivant la revendication 1, **caractérisé par** le fait de fournir la quantité globale de données de performances du GPS à un autre dispositif de l'utilisateur pour contrôler un niveau de performances d'utilisateur du dispositif de l'utilisateur.

7. Procédé suivant la revendication 1, **caractérisé par** le fait, par application de variations à un environnement d'essai, de s'appliquer au pire de cas.

8. Dispositif conçu pour mettre en oeuvre un procédé suivant la revendication 1, **caractérisé par** un moyen de production pour produire un scénario de simulation de GPS, pour simuler à l'aide de celui-ci, une expérience de conduite dans la réalité, le long d'un itinéraire spécifié à l'avance, et comprenant en particulier :
- un moyen de mémorisation de données cartographiques fournissant un ensemble de données cartographiques numérisées comprenant une région géographique propre à l'itinéraire, lequel ensemble de données comprend des données concernant des caractéristiques environnementales statiques qui sont présentes, le long de l'itinéraire ;
- un moyen de mémorisation de données de satellites fournissant des données dynamiques et/ou statiques de position et de transmission concernant des satellites de GPS qui sont potentiellement appropriés à la détermination de position par GPS, le long de l'itinéraire ;
- un premier moyen de calcul ;
- un moyen d'entrée pour l'utilisateur permettant de spécifier un instant de départ et des positions géographiques de départ et de destination de l'itinéraire, dans le premier moyen de calcul qui est aussi alimenté par le moyen de mémorisation de données cartographiques, le premier moyen de calcul calculant divers trajets de véhicule, sur la base de l'ensemble de données cartographiques numériques, et déterminant, à partir des trajets calculés, divers ensembles de positions nodales de véhicule et des instants associés, le long de l'itinéraire ;
- un deuxième moyen de calcul alimenté par le premier moyen de calcul et par le moyen de mémorisation de données de satellites, à partir des données dynamiques et/ou statiques de position et de transmission concernant des satellites de GPS, des caractéristiques environnementales présentes le long de l'itinéraire et des divers trajets de véhicule, calculant diverses données métriques instantanées de qualité du GPS,
- et sur la base des diverses données métriques de qualité de GPS et des instants associés, calculant une quantité globale de données de performances de GPS, propres à l'itinéraire.
